# NEUE EUROPÄISCHE PATENTSCHRIFT

(11) **EP 2 387 871 B2**
(45) Veröffentlichungstag und Bekanntmachung des Hinweises auf die Entscheidung über den Einspruch: **27.12.2017**
(45) Hinweis auf die Patenterteilung: 12.03.2014
(21) Anmeldenummer: 11165851.4
(22) Anmeldetag: 12.05.2011
(51) Int. Cl.: A01D 43/10

(54) **Mähaufbereiter mit Breitstreuvorrichtung**
Mower conditioner with spreading function
Faucheuse-conditionneuse dotée d'un dispositif d'épandage large

(30) Priorität: 20.05.2010 DE 102010029191
(43) Veröffentlichungstag der Anmeldung: 23.11.2011
(73) Patentinhaber: Deere & Company, Moline, IL 61265 (US)
(72) Erfinder: Lebeau, Jonathan, 21000, Dijon (FR); Tepe, Heinrich, 70100, Gray La Ville (FR)
(74) Vertreter: Magin, Ludwig Bernhard

(56) Entgegenhaltungen:
- EP-A1- 1 310 149
- AT-B- 302 703
- DE-A1- 2 231 624
- DE-T2- 69 914 865
- GB-A- 2 356 332
- US-A- 3 683 602
- SCHEIBENMÄHER AM Bd. 5, 01 März 1990,
- 'Ersatzteilliste AM' 01 September 1994, KRONE,

## Beschreibung

Die Erfindung betrifft einen Mähaufbereiter mit Leitelementen, die in den Gutstrom ragen und über welche die Richtung des Mähguts beeinflussbar ist, wobei jedes Leitelement mittels mindestens eines Halters an wenigstens einem Bauteil des Mähaufbereiters befestigbar ist.

Bei Mähaufbereitern wird das vom Mähwerk geschnittene Erntegut in einer Aufbereitungsvorrichtung einer mechanischen Behandlung unterzogen, um dessen Trocknung zu beschleunigen. Dabei wird die verdunstungshemmende Wachsschicht durch Knicken oder Quetschen teilweise zerstört. Das nach hinten ausgeworfene Erntegut wird aus Gründen einer schnellen Trocknung vorzugsweise nicht in einem Schwad abgelegt, sondern breit hinter dem Fahrzeug verteilt. Dafür sorgt eine Breitstreuvorrichtung, bei der durch Leitelemente die Richtung der Wurfbahn des Mähguts beeinflusst wird. Bei herkömmlichen Breitstreuvorrichtungen sind die Leitelemente über Halter an Bauteilen des Mähaufbereiters in der Regel angeschraubt. Insbesondere stromaufwärts gelegene Befestigungspunkte sind nur schwer zugänglich, so dass es schwierig ist, die Schraubverbindungen anzuziehen oder zu lösen.

Die EP 1 310 149 A1 offenbart einen Mähaufbereiter, bei dem hinter einer Behandlungseinheit eine Breitstreuvorrichtung positioniert ist, an der die Leitbleche fest angebracht sind. Je nach Bedarf kann die Breitstreuvorrichtung in den Gutstrom herunter geklappt werden, um die Wurfbahnen zu beeinflussen. In dieser herunter geklappten Position sind Bauteile unter der Abdeckhaube nicht mehr zugänglich. Einzelne Leitelemente lassen sich nicht anbringen oder entfernen.

Bei einer aus der GB 2 356 332 bekannten Lösung muss ein Monteur unter eine Gutführungshaube kriechen und Schrauben oder Bolzen an stromaufwärts liegenden Bereichen von Leitelementen durch Öffnungen in der Haube stecken, damit eine zweite Person auf der Oberseite der Haube diese mit Stiften oder Muttern sichern kann. Die Leitelemente sind zu lang, als dass diese Tätigkeit von einer einzigen Person ausgeführt werden könnte.

Eine Lösung nach der US 3 683 602 bringt zwar insofern Abhilfe, als es einer Schraube, Mutter und dergleichen nicht mehr bedarf; allerdings müssen die dortigen Zinken mit einem stromabwärts gelegenen Ende voran in eine Öffnung eingeführt, durchgezogen und mit dem stromaufwärts gelegenen Ende gegen Federkraft gesichert werden. D.h. dass wiederum ein Monteur unter die Gutführungshaube kriechen muss, um die Zinken in die letztendliche Position zu bringen. Diese Zinken sind allerdings nicht mit Leitblechen, denn sie ragen lediglich in den Gutstrom und lenken ihn ab, weisen aber keine nennenswerte Führungslänge in der Gutflussrichtung auf, die es erfordert, sie auch an einem stromabwärtsliegenden Ende festzulegen.

Das der Erfindung zugrunde liegende Problem wird darin gesehen, die Breitstreuvorrichtung eines Mähaufbereiters so zu gestalten, dass Leitelemente mit einem geringen Zeitaufwand und von einer einzigen Person angebracht und entfernt werden können.

Dieses Problem wird erfindungsgemäß durch die Lehre des Patentanspruchs 1 bzw. 7 gelöst, wobei in den weiteren Patentansprüchen Merkmale aufgeführt sind, die die Lösung in vorteilhafter Weise weiterentwickeln.

Erfindungsgemäß sind an einem Bauteil Öffnungen eingebracht. Dabei kann das Bauteil bereits beim Herstellungsprozess mit Öffnungen versehen werden oder diese können durch nachträgliche Materialaussparung eingebracht werden. Die Öffnungen sind als L-förmige Aussparungen ausgeführt, durch welche ein Halter eines Leitelements einsteckbar ist. Der Halter ragt durch die Öffnung hindurch. Die Fixierung des Leitelements erfolgt durch eine Anlage des Halters.

Die Befestigung der Leitelemente erfolgt mit zwei Haltern. Dabei wird ein Halter an einer im Gutstrom aufwärts gelegenen Stelle angebracht. In der Regel handelt es sich dabei um den in Fahrtrichtung vorderen, d.h. stromaufwärts gelegenen Halter. Erfindungsgemäß ist dieser Halter über Öffnungen in den Bauteil einsteckbar und/oder einhängbar. Dies erleichtert eine Anbringung, da dieser Teil des Mähaufbereiters schwer zugänglich ist. Insbesondere erschwert der in diesem Bereich angeordnete Rotor eine Positionierung separater Befestigungselemente, wie beispielsweise Schrauben. Dagegen ist der stromabwärts gelegene, in Fahrtrichtung hintere, Halter in der Regel gut zugänglich, so dass eine Fixierung mit Befestigungselemehten leicht möglich ist. Die Leitelemente können beispielsweise mit Schrauben, Klemmbacken, reibschlüssig gegen Federkraft etc. befestigt werden, die durch schlitzförmige Öffnungen des Bauteils gesteckt werden. Dabei ist es möglich, den Winkel des Leitelements im Verhältnis zur Fahrtrichtung zu verändern und damit die horizontale Ablenkung des Mähguts zu variieren. Eine einzige Person kann nun das Leitelement im Bereich des rückwärtigen Halters ergreifen, es mit seinem vorderen Halter einstecken und schließlich mit dem rückwärtigen zugänglichen Halter befestigen.

Die Öffnung kann dabei im Vergleich zu den Abmessungen des Halters entweder größer oder kleiner ausgeführt sein.

Ist die Öffnung größer so kann der Halter über die Öffnung am Bauteil eingehängt werden. Er liegt auf dem Bauteil auf. Die Krafteinwirkung erfolgt über das Eigengewicht des Leitelements. Die Unterseite des Halters wird von dem Bauteil gestützt. Bei einer vorteilhaften Ausführung der Erfindung wirkt zusätzlich eine Vorrichtung auf die Oberseite des Halters, wodurch dieser gegen den Bauteil gedrückt wird. Als Vorrichtung kann beispielsweise ein Gewicht dienen. Besonders günstig erweist sich eine Vorrichtung, bei der eine Platte von einem Spannelement, vorzugsweise einer Feder, gegen die Oberseite des Halters gedrückt wird. Andererseits kann die Platte selbst als Spannelement wirken, z. B. als Blattfeder, bzw. Federblech oder als eine Kunststoff- oder Gummileiste mit innerer Spannung. Für mehrere Leitelemente kann eine gemeinsame Vorrichtung oder je eine eigene vorgesehen sein. Auch kann das Leitelement mit einem Schnappmechanismus versehen sein, der es in dem Bauteil verankert, so dass es nicht mehr kippen kann. Schließlich verhindert auch eine große Materialdicke oder Formung des Bauteils im Bereich der Öffnung, dass sich das Leitelement viel bewegen kann.

Die Öffnung kann im Vergleich zum Halter auch kleiner ausgeführt sein. Halter und Öffnung bilden dann eine Presspassung. Der Halter wird in die Öffnung gedrückt, wobei die Wände der Öffnung den Halter einquetschen und auf diese Weise fixieren.

Durch das erfindungsgemäße Befestigungsprinzip werden die Leitelemente auf einfache Weise ohne den Einsatz von Werkzeugen vorne befestigt. Somit ist eine schnelle und präzise Anbringung und Entfernung der Leitelemente möglich, ohne dass im vorderen Bereich zusätzliche Befestigungsmittel, wie beispielsweise Schrauben oder Stifte, erforderlich sind.

Der Halter ist im Querschnitt L-förmig ausgebildet. Beispielsweise kann er als Winkel ausgeführt sein. Maßgeblich ist, dass die Form der Öffnung und des Halters aufeinander abgestimmt sind. Dabei sind die oben beschriebenen Wirkprinzipien der Fixierung, also Aufliegen oder Einquetschen, zu beachten.

Bei dem Halter kann es sich um ein separates Element handeln, dessen Anbringung am Leitelement mit Schrauben, Nieten, durch Kleben, Schweißen etc. erfolgt.

Bei einer besonders bevorzugten Ausführungsform der Erfindung dient ein Teilbereich des Leitelements als Halter. Der Halter wird von dem Leitelement gebildet. Halter und Leitelement sind somit einstückig ausgeführt, wobei sich eine besonders stabile Konstruktion ergibt. Als besonders günstig erweist es sich dabei, wenn das Leitelement an einem Ende um 90° abgeknickt ist und auf diese Weise einen Winkel als Halter ausbildet, der in einer darauf abgestimmten Öffnung platzierbar ist. Der Halter kann aber auch als eine Zunge, eine Welle etc. ausgebildet sein, die aus oder an dem Leitelement gebildet ist, und nach vorne übersteht, um in eine Öffnung in dem Bauteil gesteckt werden zu können.

Die erfindungsgemäße Breitstreuvorrichtung bewirkt eine breite Verteilung des Ernteguts hinter dem Mähaufbereiter. Dazu lenken die Leitelemente den Gutstrom in horizontaler Richtung ab. Als Platten ausgeführte Leitelemente sind weitgehend senkrecht im Gutstrom angeordnet und erstrecken sich nach hinten. Über eine Verstellung des Winkels der Platten im Verhältnis zur Fahrtrichtung wird die Ablegbreite des Mähguts variiert. Auf diese Weise ist das Mähgut in horizontaler Richtung beeinflussbar.

Zur Befestigung der Leitelemente eignen sich vorzugsweise Bauteile an denen der Gutstrom zumindest bereichsweise vorbeigeführt wird, wobei es sich als besonders günstig erweist, wenn diese Bauteile oberhalb des Gutstroms angeordnet sind, da dann die Leitelemente durch ihr Eigengewicht im Gutstrom hängen. Beispielsweise kommt dafür der Rahmen in Betracht, in den die Leitelemente einsteckbar und/oder einhängbar sind. Als besonders günstige Befestigungsmöglichkeit eignen sich Abdeckplatten oder -hauben, die oberhalb des Gutstroms positioniert sind. Die Abdeckplatten sind in der Regel aus Blech gefertigt, das gut bearbeitbar ist und an dem auf einfache Weise zur Bildung von Öffnungen Materialaussparungen vornehmbar sind. Da es sich um keine tragenden Bauteile handelt, gefährdet die Einbringung von Öffnungen nicht die Stabilität des Mähaufbereiters.

In der Zeichnung ist ein nachfolgend näher beschriebenes Ausführungsbeispiel der

Erfindung dargestellt. Es zeigt:
- Fig. 1: eine schematische Darstellung eines Mähaufbereiters mit einer Breitstreueinrichung in Seitenansicht,

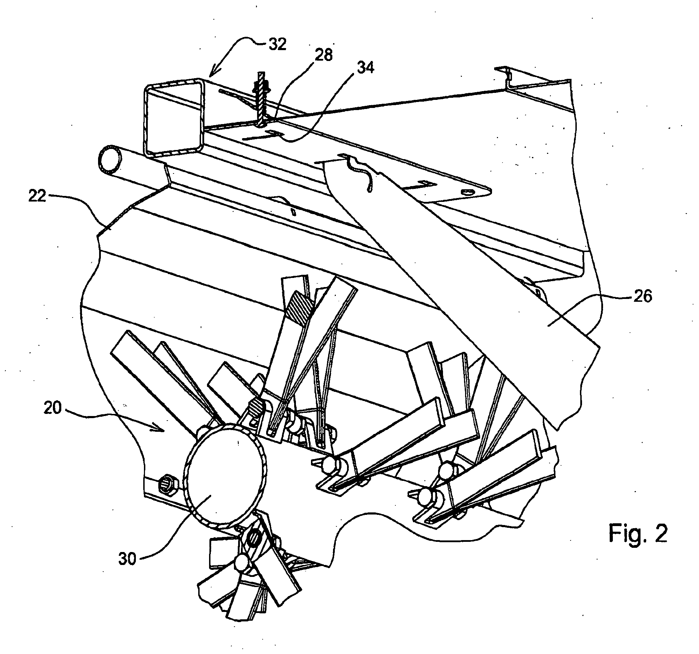

- Fig. 2: eine perspektivische Teilansicht von unterhalb des Rotors,

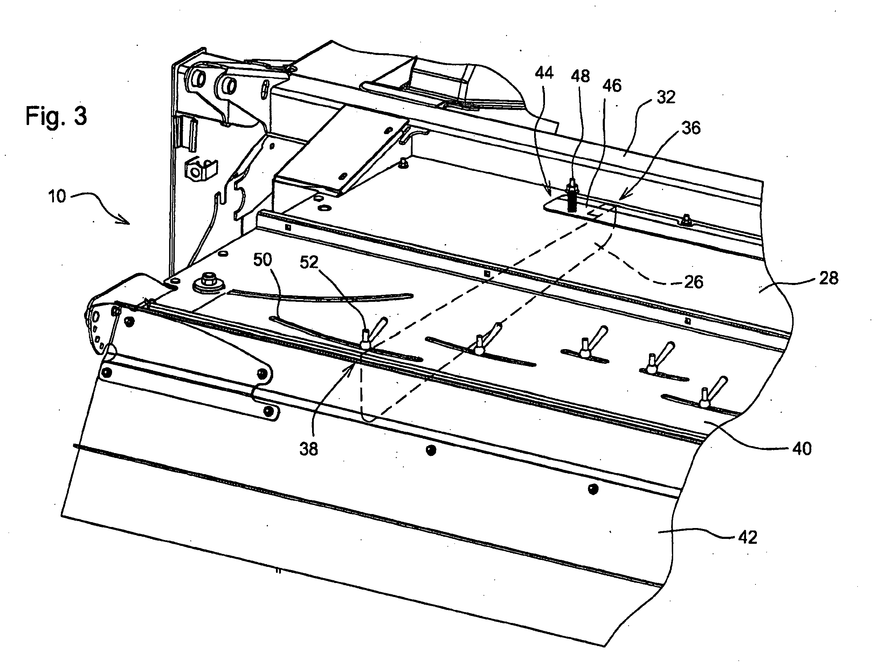

- Fig. 3: eine perspektivische Sicht auf einen rückwärtigen Abschnitt des Mähaufbereiters,
- Fig. 4: eine Seitenansicht von Rotor, Gutführvorrichtung und Breitstreuvorrichtung,

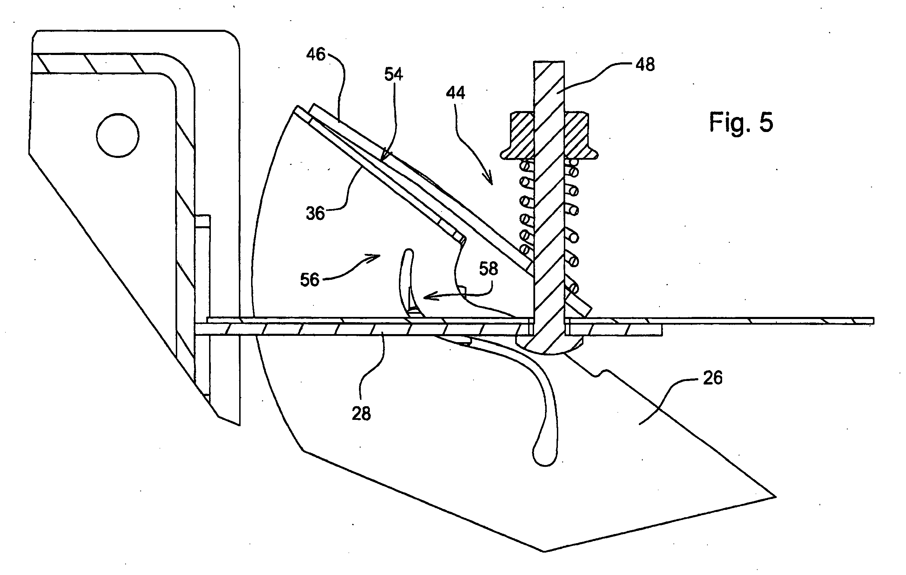

- Fig. 5: eine aus Fig. 4 vergrößerte Ansicht der Vorrichtung zur Fixierung des Halters,

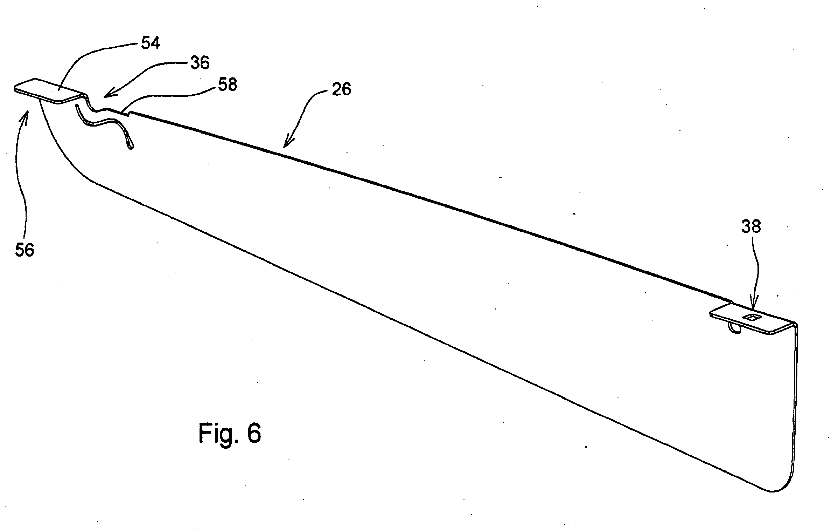

- Fig. 6: eine perspektivische Ansicht eines Leitelements.

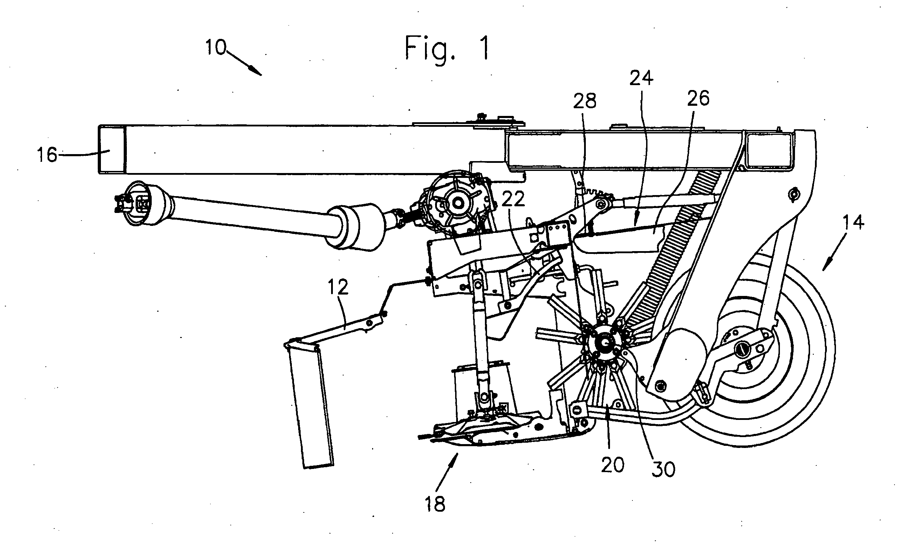

In Fig. 1 ist ein Mähaufbereiter 10 dargestellt mit einem Gehäuse 12, einem Fahrwerk 14, einer Deichsel 16, einem Mähbalken 18, einem als Aufbereitungsvorrichtung wirkenden Rotor 20, einer Gutführvorrichtung 22 und einer Breitstreuvorrichtung 24.

Der Mähbalken 18 trennt stehendes Gut vom Boden, das sich dann rückwärtig wegbewegt und von dem mit Blick auf die Zeichnung im Uhrzeigerdrehsinn drehenden Rotor 20 angehoben und an der Gutführvorrichtung 22 entlang zu der Breitstreuvorrichtung 24 gefördert wird. Aufgabe der Gutführvorrichtung 22 ist es, gemähtes Gut zunächst in Eingriff mit dem Rotor 20 zu halten und in einen Spalt zwischen Rotor 20 und Gutführvorrichtung 22 zu klemmen, so dass das inhomogene Gut aufeinander reibt und für den Trocknungsprozess aufbereitet wird. Anschließend wird das Gut, nachdem es sich vom Rotor 20 löst, stromabwärts gefördert, wobei die Breitstreuvorrichtung 24 den Gutstrom lenkt.

Die Breitstreuvorrichtung 24 ist oberhalb des Rotors 20 angeordnet und erstreckt sich von einem Punkt, der in der senkrechten Verlängerung oberhalb der Drehachse 30 des Rotors 20 liegt, in Fahrtrichtung nach hinten. Die Breitstreuvorrichtung 24 umfasst Leitelemente 26, die an einem Bauteil 28 befestigt sind. Im Ausführungsbeispiel ist der Bauteil 28 als rechteckiges oder trapezförmiges Abdeckblech ausgeführt, das horizontal angeordnet ist und wie eine Haube wirkt. Die längere Seite des Bauteils 28 erstreckt sich parallel zur Achse 30 des Rotors 20. Die Leitelemente 26 sind im Ausführungsbeispiel als senkrecht ausgerichtete Platten oder Bleche ausgeführt, welche die Wurfbahn bzw. die Richtung oder Streuung des Mähguts in horizontaler Richtung beeinflussen.

Zwischen dem Rotor 20 und der Gutführvorrichtung 22 wird der Gutstrom gefördert und zunächst an der Unterseite eines als Hohlquaders ausführten Rahmens 32 und dann an der Unterseite des als Platte ausgeführten Bauteils 28 vorbei geführt. Der Bauteil 28 schließt nahtlos an die nach hinten gewandte Seite des Rahmens 32 an und ist mit diesem verbunden.

In den Bauteil 28 sind Öffnungen 34 eingebracht. Bei den Öffnungen handelt es sich um L-förmige Aussparungen im Bauteil 28. In jede Öffnung 34 wird jeweils ein Teilbereich eines Leitelements 26 hindurch gesteckt. Somit liegt nach der Befestigung der Leitelemente 26 ein Teil jedes Leitelements 26 oberhalb des Bauteils 28, während der die Wurfbahn beeinflussende Teil unterhalb des Bauteils 28 verläuft.

Jedes Leitelement 26 ist mittels zweier Halter 36, 38 befestigt. Dabei wird der eine Halter 36 über eine Öffnung 34 in den vorderen Bauteil 28 eingesteckt und/oder eingehängt, während der andere Halter 38 an einen rückwärtigen Bauteil 40 angeschraubt wird. Bei beiden Bauteilen 28, 40 handelt es sich um horizontal, hintereinander angeordnete und miteinander verbundene Platten, die in einem anderen Ausführungsbeispiel auch einteilig ausgebildet sein können. An den rückwärtigen Bauteil 40 schließt sich eine nach unten hängende Plane 42 an, welche den Auswurf abdeckt.

Das Leitelement 26 ist als Platte ausgeführt. An dessen vorderen und hinteren Ende sind Winkel angeformt, welche die Halter 36, 38 bilden, mittels derer das Leitelement 26 befestigt wird. Direkt hinter dem vorderen Halter 36 ist das Leitelement 26 mit einer gewundenen und sich entlang des Halters erstreckenden Aussparung 58 versehen. Der vordere Halter 36 ist ca. 5 cm lang und erstreckt sich mit seinem abgewinkelten Teil oberhalb der Kontur des übrigen Leitelements 26, so dass dieser abgewinkelte als Halter 36 dienende Teil oberhalb des Bauteils 28, der Rest aber unterhalb des Bauteils 28 angeordnet werden kann. Der Halter 36 kann, muss sich aber nicht über die gesamte Länge des Leitelements 26 erstrecken, das insgesamt 50 bis 100 cm lang sein kann und aus Blech gebildet ist.

In den rückwärtigen Bauteil 40 sind schlitzförmige Öffnungen 50 eingebracht, die in einem Bogen verlaufen. Der Bogen erstreckt sich entlang des horizontalen Schwenkbogens des jeweiligen Leitelements 26 um dessen vorderen Befestigungspunkt. Zur Befestigung eines Leitelements 26 wird durch eine Bohrung im hinteren Halter und die Öffnung 50 ein Befestigungselement 52 gesteckt, vorzugsweise eine Schraube, mit dem das Leitelement 26 mittels seines rückwärtigen Halters 38 in der gewünschten Position fixiert wird. Durch Veränderung des Fixierungspunktes entlang der schlitzförmigen Öffnungen 50 wird die horizontale Richtung des Mähguts variiert.

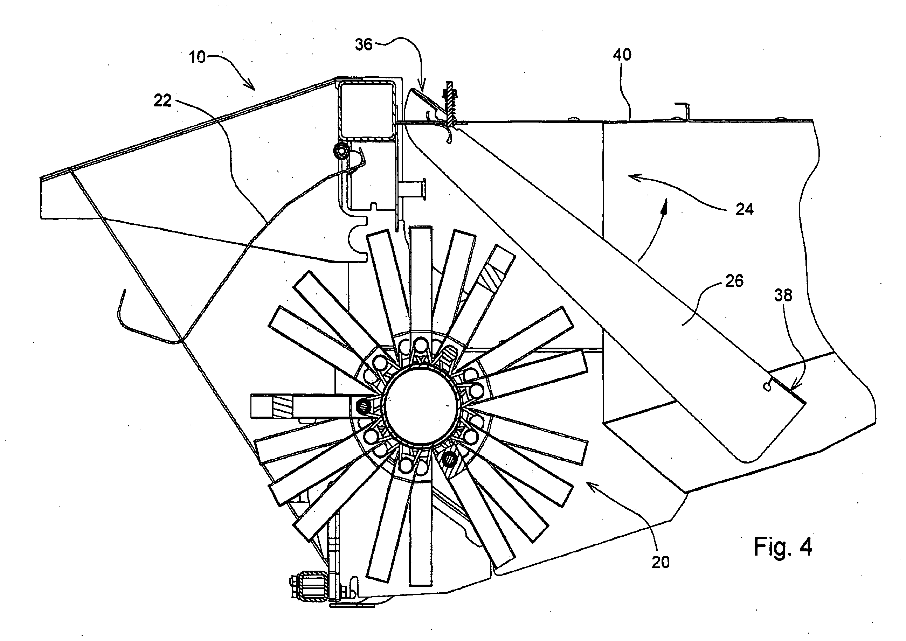

Die Breitstreuvorrichtung 24 umfasst Leitelemente 26, welche an Bauteilen 28, 40 befestigt sind. Zum Anbringen der Leitelemente 26, werden deren vordere Bereiche durch die Öffnungen 34, hindurch gesteckt. Die Leitelemente 26 werden dann in Richtung der in Fig. 4 dargestellten Pfeilspitze nach oben geklappt, wobei sie eine Drehbewegung um den vorderen Befestigungspunkt durchführen. Dann werden die Leitelemente 26 mittels ihres rückwärtigen Halters 38 mit Befestigungselementen 52 am rückwärtigen Bauteil 40 fixiert.

Eine Vorrichtung 44 oberhalb des vorderen Bauteils 28 drückt auf die Oberseite 54 des Halters 36 und diesen damit gegen den Bauteil 28. Die Vorrichtung 44 umfasst eine Platte 46, welche von einem Spannelement 48, vorzugsweise einer Feder, gegen das Bauteil 28 gepresst wird. Der Halter 36 ist zwischen dem Bauelement 28 und der Platte 46 eingeklemmt. Die Unterseite 56 des Halters 36 wird von dem Bauteil 28 gestützt. Die Platte 46 erstreckt sich über die gesamte Breite des Bauteils 28 und erfasst somit alle Leitelemente 28.

Entsprechend der vorherigen Beschreibung wird zur Montage des Leitelements 26 dessen im Querschnitt L-förmiger Halter 36 im schräg oder senkrecht durch die L-förmige Öffnung 34 geschoben und dabei mit dem rückwärtigen Ende nach oben geschwenkt. Dabei gelangt der Halter 36 auf die Oberseite der Bauteils 28 und in Anlage an die Unterseite der Platte 44. Indem der Halter 36 sich zwischen den Bauteil 28 und die Platte 44 drängt, wird das Spannelement 48 beaufschlagt und drückt den Halter 28 in Anlage an der Oberseite des Bauteils 28. Die Platte 44 wirkt zugleich auf alle eingesteckten Leitelemente 28. Letzteres ist aber nicht zwingend; vielmehr kann pro Leitelement 28 eine eigene Platte 44 und Spannelement 48 vorgesehen werden und je nach dem vorhandenen Spielraum kann auch ganz darauf verzichtet werden.

## Patentansprüche

1. Mähaufbereiter (10):
a) mit wenigstens einem Bauteil (28, 40), in den Öffnungen (34) in Form von L-förmigen Aussparungen eingebracht sind, und
b) mit Leitelementen (26), die in den Gutstrom ragen und über welche die Richtung des Mähguts beeinflussbar ist, wobei jedes Leitelement (26) einen stromaufwärts gelegenen und einen stromabwärts gelegenen Halter (36, 38) aufweist, von denen
c) der stromaufwärts gelegene Halter (36) im Querschnitt L-förmig ausgebildet ist und in eine stromaufwärts gelegene Öffnung in dem Bauteil (28) eingesteckt und/oder eingehängt wird und sich auf ihm abstützt und
d) der stromabwärts gelegene Halter (38) mittels eines Befestigungselements (52) stromabwärts an dem Bauteil fixiert wird.

2. Mähaufbereiter nach Anspruch 1, **dadurch gekennzeichnet, dass** der Bauteil (28) den stromaufwärts gelegenen Halter (36) stützt.

3. Mähaufbereiter nach Anspruch 1 oder 2, **dadurch gekennzeichnet, dass** eine Vorrichtung (44) den stromaufwärts gelegenen Halter (36) gegen den Bauteil (28) drückt.

4. Mähaufbereiter nach einem oder mehreren der vorherigen Ansprüche, **dadurch gekennzeichnet, dass** ein Teilbereich des Leitelements (26) als Halter (36) dient.

5. Mähaufbereiter nach einem oder mehreren der vorherigen Ansprüche, **dadurch gekennzeichnet, dass** die Leitelemente (26) als senkrecht angeordnete Platten ausgeführt sind, mit denen das Mähgut in horizontaler Richtung beeinflussbar ist.

6. Mähaufbereiter nach einem oder mehreren der vorherigen Ansprüche, **dadurch gekennzeichnet, dass** die Bauteile (28, 40) als plattenförmige Elemente ausgeführt sind, die oberhalb des Gutstroms angeordnet sind.

7. Leitelement (26) für einen Mähaufbereiter (10), wobei:
a) das Leitelement (26) im Gutstrom so positionierbar ist, dass die Richtung des Mähguts beeinflussbar ist und jedes Leitelement (26) über mindestens einen stromaufwärts gelegenen Halter (36, 38) verfügt, mittels dessen es an wenigstens einem Bauteil (28, 40) des Mähaufbereiters (10) befestigbar ist,
b) der stromaufwärts gelegene Halter (36) im Querschnitt L-förmig ausgebildet ist und so ausgeführt ist, dass er in Öffnungen (34) in Form von L-förmigen Aussparungen wenigstens eines Bauteils (28) einsteckbar und/oder einhängbar und auf dem Bauteil (28) abstützbar ist und
c) ein stromabwärts gelegener Halter (38) vorgesehen ist, mit dem das Leitelement (26) stromabwärts an dem Bauteil mittels eines Befestigungselements (52) fixierbar ist.

8. Leitelement nach Anspruch 7, **dadurch gekennzeichnet, dass** ein Teilbereich des Leitelements (26) den stromaufwärts gelegenen Halter (36) bildet.

9. Leitelement nach Anspruch 7 oder 8, **dadurch gekennzeichnet, dass** der stromaufwärts gelegene Halter (36) als Winkel ausgeführt ist.

10. Leitelement nach einem oder mehreren der Ansprüche 7 bis 9, **dadurch gekennzeichnet, dass** das Leitelement (26) als Platte ausgeführt ist.

## Claims

1. Mower conditioner (10):
a) with at least one component (28, 40) into which openings (34) in the form of L-shaped recesses are placed, and
b) with guiding elements (26) which project into the stream of material and via which the direction of the mown material can be influenced, wherein each guiding element (26) has an upstream-located holder (36) and a downstream-located holder (38), of which
c) the upstream-located holder (36) has an L-shaped cross section and is inserted and/or fitted into an upstream-located opening (34) in the component (28) and is supported on the latter, and
d) the downstream-located holder (38) is fixed downstream to the component (40) by means of a fastening element (52).

2. Mower conditioner according to Claim 1, **characterized in that** the component (28) supports the upstream-located holder (36).

3. Mower conditioner according to Claim 1 or 2, **characterized in that** a device (44) presses the upstream-located holder (36) against the component (28) .

4. Mower conditioner according to one or more of the preceding claims, **characterized in that** a partial region of the guiding element (26) serves as the holder (36).

5. Mower conditioner according to one or more of the preceding claims, **characterized in that** the guiding elements (26) are designed as vertically arranged plates with which the mown material can be influenced in the horizontal direction.

6. Mower conditioner according to one or more of the preceding claims, **characterized in that** the components (28, 40) are designed as plate-like elements which are arranged above the stream of material.

7. Guiding element (26) for a mower conditioner (10), wherein:
a) the guiding element (26) can be positioned in the stream of material in such a manner that the direction of the mown material can be influenced, and each guiding element (26) has at least one upstream-located holder (36) by means of which said guiding element can be fastened to at least one component (28) of the mower conditioner (10),
b) the upstream-located holder (36) has an L-shaped cross section and is designed in such a manner that it can be inserted and/or fitted into openings (34) in the form of L-shaped recesses in at least one component (28) and can be supported on the component (28), and
c) a downstream-located holder (38) is provided, with which the guiding element (26) can be fixed downstream to the component (40) by means of a fastening element (52).

8. Guiding element according to Claim 7, **characterized in that** a partial region of the guiding element (26) forms the upstream-located holder (36).

9. Guiding element according to Claim 7 or 8, **characterized in that** the upstream-located holder (36) is designed as an angle.

10. Guiding element according to one or more of Claims 7 to 9, **characterized in that** the guiding element (26) is designed as a plate.

## Revendications

1. Faucheuse-conditionneuse (10) :
a) comprenant au moins un composant (28, 40), dans lequel sont pratiquées des ouvertures (34) sous forme de cavités en, et
b) comprenant des éléments de guidage (26) qui pénètrent dans le flux de produits et par le biais desquels la direction des produits fauchés peut être influencée, chaque élément de guidage (26) présentant un dispositif de retenue placé en amont et un dispositif de retenue placé en aval (36, 38),
c) le dispositif de retenue placé en amont (36) présentant une section transversale en L et étant enfiché et/ou accroché dans une ouverture (34) placée en amont dans le composant (28) et étant supporté sur ce composant et
d) le dispositif de retenue placé en aval (38) étant fixé au moyen d'un élément de fixation (52) en aval sur le composant (40).

2. Faucheuse-conditionneuse selon la revendication 1, **caractérisée en ce que** le composant (28) supporte le dispositif de retenue placé en amont (36).

3. Faucheuse-conditionneuse selon la revendication 1 ou 2, **caractérisée en ce qu'**un dispositif (44) presse le dispositif de retenue placé en amont (36) contre le composant (28).

4. Faucheuse-conditionneuse selon l'une quelconque ou plusieurs des revendications précédentes, **caractérisée en ce qu'**une région partielle de l'élément de guidage (26) sert de dispositif de retenue (36).

5. Faucheuse-conditionneuse selon l'une quelconque ou plusieurs des revendications précédentes, **caractérisée en ce que** les éléments de guidage (26) sont réalisés sous forme de plaques disposées verticalement, avec lesquelles les produits fauchés peuvent être influencés dans la direction horizontale.

6. Faucheuse-conditionneuse selon l'une quelconque ou plusieurs des revendications précédentes, **caractérisée en ce que** les composants (28, 40) sont réalisés sous forme d'éléments en forme de plaques qui sont disposés au-dessus du flux de produits.

7. Élément de guidage (26) pour une faucheuse-conditionneuse (10), dans lequel :
a) l'élément de guidage (26) peut être positionné dans le flux de produits de telle sorte que la direction des produits fauchés puisse être influencée et chaque élément de guidage (26) dispose d'au moins un dispositif de retenue placé en amont (36), au moyen duquel il peut être fixé sur au moins un composant (28) de la faucheuse-conditionneuse (10),
b) le dispositif de retenue placé en amont (36) présente une section transversale en L et est réalisé de telle sorte qu'il puisse être enfiché et/ou accroché dans des ouvertures (34) sous forme de cavités en L d'au moins un composant (28) et qu'il puisse être supporté sur le composant (28) et
c) un dispositif de retenue placé en aval (38) est prévu, avec lequel l'élément de guidage (26) peut être fixé en aval sur le composant (40) au moyen d'un élément de fixation (52).

8. Élément de guidage selon la revendication 7, **caractérisé en ce qu'**une région partielle de l'élément de guidage (26) forme le dispositif de retenue placé en amont (36).

9. Élément de guidage selon la revendication 7 ou 8, **caractérisé en ce que** le dispositif de retenue placé en amont (36) est réalisé sous forme d'équerre.

10. Élément de guidage selon l'une quelconque ou plusieurs des revendications 7 à 9, **caractérisé en ce que** l'élément de guidage (26) est réalisé sous forme de plaque.
